Europäisches Patentamt

**European Patent Office**

**Office européen des brevets**

(19)

(11) Numéro de publication: **0 169 143**
A2

# (12) DEMANDE DE BREVET EUROPEEN

(21) Numéro de dépôt: **85401430.5**

(22) Date de dépôt: **12.07.85**

(51) Int. Cl.⁴: **G 03 H 1/00**, G 01 B 9/021

(30) Priorité: **19.07.84 FR 8411450**

(43) Date de publication de la demande: **22.01.86**
**Bulletin 86/4**

(84) Etats contractants désignés: **BE CH DE FR GB IT LI SE**

(71) Demandeur: **SOCIETE NATIONALE INDUSTRIELLE
AEROSPATIALE Société dite:, 37 Boulevard de
Montmorency, F-75781 Paris Cedex 16 (FR)**

(72) Inventeur: **Bouteyre, Jacques, 31, rue Gustave Gaillard,
F-33160 Saint Medard en Jalles (FR)**
Inventeur: **Le Floc'h, Christian, Résidence Dulamon
No. 44, F-33190 Blanquefort (FR)**

(74) Mandataire: **Mongrédien, André et al, c/o
BREVATOME 25, rue de Ponthieu, F-75008 Paris (FR)**

(54) **Caméra holographique et dispositif de contrôle non-destructif utilisant une telle caméra.**

(57)    La présente invention a pour objet une caméra holographique ainsi qu'un dispositif de contrôle non destructif par holographie optique utilisant une telle caméra.

Celle-ci, montée sur un support (20), est mobile en rotation autour d'un axe (24) confondu avec le faisceau laser entrant (28a) et est équipée d'un boîtier enregistreur (86) contenant un film sensible (68), tandis que des miroirs ou des prismes (54, 56) déplaçables à l'intérieur de la caméra permettent de régler la longueur du faisceau de référence (43).

Application au contrôle de l'état interne d'une pièce creuse.

## Caméra holographique et dispositif de contrôle non-destructif utilisant une telle caméra

La présente invention a pour objet une caméra holographique ainsi qu'un dispositif de contrôle non-destructif par holographie optique pouvant utiliser une telle caméra et présentant une plus grande souplesse d'utilisation que les dispositifs de l'art antérieur.

On rappelle que l'holographie est une méthode de photographie en relief utilisant les interférences produites par deux faisceaux de lumière cohérente. Ces deux faisceaux sont obtenus par séparation d'une émission laser. Le point de séparation détermine le départ des deux faisceaux vers un plan film. Le premier faisceau, dirigé vers l'objet et rétrodiffusé par ce dernier vers le plan film, est appelé "faisceau objet" et le second faisceau est appelé "faisceau de référence". Les parcours des deux faisceaux depuis le point de séparation jusqu'au plan film sont de même longueur et l'objet à observer doit être situé à l'intérieur de la longueur de cohérence du laser. Ces deux faisceaux interfèrent sur un plan film, codant ainsi en amplitude la différence de marche induite par le relief de l'objet. Le plan film est ensuite développé et on l'observe en l'éclairant au moyen d'un faisceau laser de même incidence. Grâce aux interférences qui ont impressionné le film, l'observateur peut voir en relief l'objet qui a été photographié.

Lorsqu'on désire utiliser l'holographie pour le contrôle non-destructif d'une pièce mécanique, on superpose un premier hologramme de l'objet sous un certain état de contrainte et un deuxième hologramme de l'objet sous un autre état de contrainte. En général, le premier état correspond à une absence de contrainte tandis que, dans le deuxième état, la pièce

B 8196    JR

subit des contraintes de traction ou des contraintes dues, par exemple, à la pression d'un gaz. S'il y a des anomalies, celles-ci sont mises en évidence par des singularités dans le jeu de franges de l'interférogramme lu par le contrôleur. On appelle "interférogramme" l'image obtenue par la superposition des hologrammes de la pièce sous deux états de contrainte différents. Il est ainsi possible de détecter des défauts tels que failles, fissures, décollements sur des pièces massives pleines ou creuses.

Pour les pièces creuses, il est souvent nécessaire de rechercher les défauts à l'intérieur des cavités. Or, dans les bancs de contrôle holographique actuels, le laser et la caméra holographique sont solidaires et indissociables, c'est-à-dire que leur position relative ne peut être modifiée à cause de l'alignement optique établi. Ceci entraîne que, dans une position donnée, ils ne couvrent qu'une zone d'investigation déterminée. Si l'on désire agrandir le champ d'investigation, il faut soit déplacer l'objet à contrôler par rapport au dispositif, soit déplacer l'ensemble du dispositif par rapport à l'objet, ou encore disposer de plusieurs caméras holographiques, chacune étant affectée à une zone déterminée. On conçoit que ces solutions ne sont pas d'un usage commode, puisqu'il est difficile de déplacer l'objet à contrôler ou l'ensemble du dispositif de contrôle et qu'il est coûteux et encombrant d'utiliser plusieurs caméras. Un autre défaut est que l'ensemble indissociable laser-caméra présente des dimensions importantes qui lui interdisent de pénétrer dans des cavités de petites dimensions : or il est souvent nécessaire de contrôler l'état interne de pièces creuses.

La présente invention a justement pour but de remédier à ces inconvénients en proposant une caméra holographique et un dispositif de contrôle non-destructif par holographie optique qui permettent d'effectuer ces contrôles dans des cavités de petites dimensions tout en autorisant la caméra à balayer une surface importante par des moyens faciles à mettre en oeuvre. De plus, le dispositif de l'invention peut être automatisé de manière à réaliser en une seule séquence la totalité des prises de vue nécessaires pour un même objet, le contrôleur pouvant ensuite visionner à son gré les différents interférogrammes sur un moyen séparé.

La caméra holographique objet de l'invention comporte, de manière classique, une entrée pour un faisceau laser, des moyens de création d'un faisceau de référence et d'un faisceau objet et un film sensible. Selon l'invention, elle comporte en outre :
- des moyens de montage sur un support permettant une rotation de la caméra autour d'un axe confondu avec le faisceau laser entrant,
- des moyens pour faire varier la longueur du faisceau de référence, et
- un boîtier enregistreur contenant le film sensible.

Selon une autre caractéristique de la caméra objet de l'invention, les moyens de montage de celle-ci sur un support comprennent :
- un palier solidaire de la caméra monté sur le support au moyen de roulements à billes, l'axe dudit palier étant confondu avec le faisceau laser entrant,
- une roue dentée solidaire du palier,
- un pignon coopérant avec ladite roue dentée, et
- un moteur entraînant le pignon.

Selon une autre caractéristique de cette caméra, les moyens pour faire varier la longueur du faisceau de référence comprennent au moins un élément réfléchissant déplaçable à l'intérieur de la caméra grâce à un mécanisme d'entraînement. Cet élément réfléchissant peut être un miroir ou un prisme : la caméra peut être équipée d'une série de miroirs ou d'une série de prismes, mais on peut également imaginer un système dans lequel on aurait simultanément un ou plusieurs miroirs et un ou plusieurs prismes. Les miroirs peuvent être des miroirs à réflexion totale, mais ceci n'est pas obligatoire.

Le film sensible utilisé peut être soit un film de type courant, soit un film thermoplastique. D'autre part, le boîtier enregistreur peut être équipé d'un dispositif électronique commandant automatiquement le déroulement du film sensible et fournissant les ordres de tir laser. On peut également prévoir un dispositif de marquage du film intégré au boîtier enregistreur permettant l'identification des prises de vue par impression du film au fur et à mesure de son déroulement. Si l'on désire faire une observation immédiate des hologrammes afin d'accélérer le contrôle, on peut utiliser un système vidéo placé dans la caméra à proximité immédiate du boîtier enregistreur : le système vidéo, qui est utilisé avec un film thermoplastique, permet d'observer un interférogramme quelques secondes après la prise de vue.

Enfin, le boîtier enregistreur peut être relié à un système programmable commandant un cycle de prises de vue.

L'invention a également pour objet un dispositif de contrôle non-destructif d'une pièce par holographie optique. Selon la principale caractéristique de ce dispositif, celui-ci comprend :
- une source laser émettant un faisceau laser,
- une caméra holographique dissociée de la source laser et placée au voisinage de la pièce à contrôler,

- des moyens pour amener le faisceau laser depuis la source jusqu'à la caméra, et
- des moyens pour déplacer la caméra au voisinage de la pièce à contrôler.

L'expression "dissociée de la source laser" utilisée à propos de la caméra dans la présente description signifie que la source laser et la caméra ne sont pas rigidement liées l'une à l'autre, par exemple à l'intérieur d'un même caisson comme c'est généralement le cas dans les dispositifs de l'art antérieur, mais sont séparées de sorte qu'on peut déplacer la caméra sans déplacer la source laser et inversement. Bien entendu, les moyens de transmission du faisceau laser entre la source et la caméra sont réglés en fonction de la position relative de ces deux éléments. Cette disposition fait qu'on peut facilement déplacer la caméra autour de la pièce à contrôler ou l'introduire à l'intérieur de cavités de dimensions relativement faibles si on veut contrôler l'état interne d'une pièce creuse. C'est pourquoi on cherche à réduire autant que possible les dimensions de la caméra. Dans le mode préféré de réalisation du dispositif, la caméra est constituée comme indiqué ci-dessus.

De préférence, la source laser est une source à impulsions, ce qui autorise les meilleures conditions d'enregistrement en ambiance industrielle. En effet, si on utilisait un laser à émission continue de lumière, il faudrait recréer des conditions de laboratoire en milieu industriel, ce qui est difficilement envisageable. Enfin, on peut équiper le dispositif d'un système programmable commandant le déroulement d'un cycle de contrôle.

L'invention apparaîtra mieux à la lecture de la description qui va suivre, donnée à titre d'exemple purement illustratif et nullement limitatif, en référence aux dessins annexés dans lesquels :

- la figure 1 est une vue schématique en

B 8196    JR

élévation et partiellement en coupe de l'ensemble d'un dispositif de contrôle non-destructif par holographie optique conforme à l'invention,

      - la figure 2 est une vue schématique en perspective illustrant le cheminement d'un faisceau laser depuis la source jusqu'à la caméra et à l'objet à contrôler,

      - la figure 3 est une vue schématique en élévation et en coupe d'une caméra holographique conforme à l'invention,

      - la figure 4 est une vue de dessus de la même caméra suivant la flèche F de la figure 3,

      - la figure 5 est une vue schématique en perspective du boîtier enregistreur équipant ladite caméra holographique,

      - les figures 6a à 6h sont des vues schématiques illustrant les différentes étapes de la prise de vue d'un interférogramme, et

      - la figure 7 est une vue schématique en élévation montrant comment un contrôleur observe les interférogrammes.

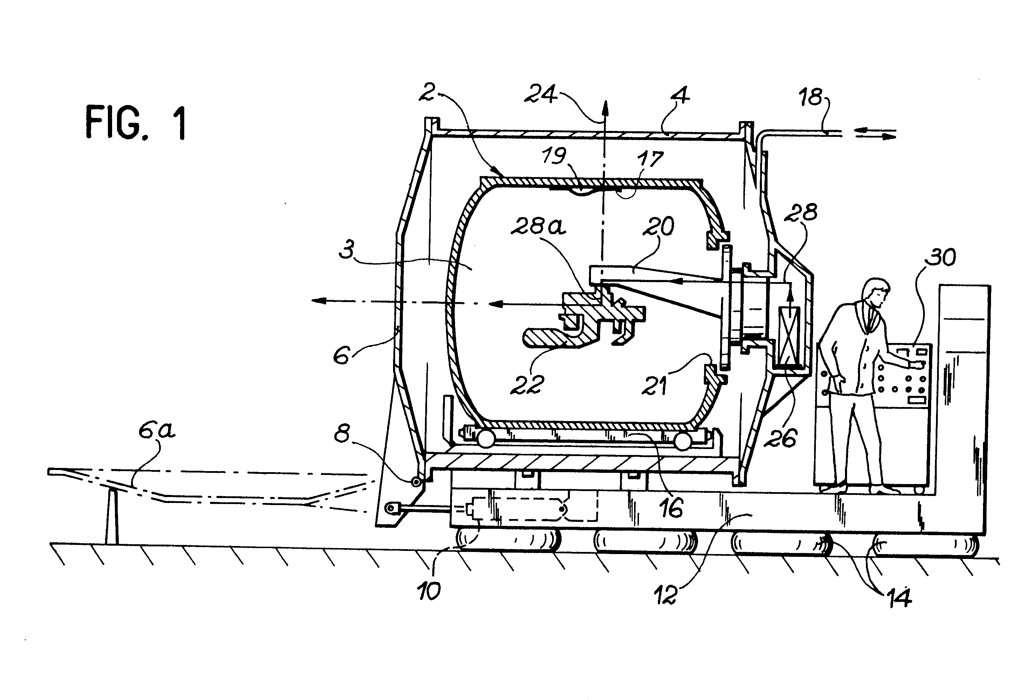

      Sur la figure 1, on voit que l'objet à contrôler est un corps creux de révolution 2 placé à l'intérieur d'un caisson 4 fermé par une porte 6. L'intérieur du corps creux 2 définit la cavité à observer 3. La porte 6 est mobile en rotation autour d'un axe 8 par l'intermédiaire d'un vérin 10 et peut venir en une position ouverte 6a représentée schématiquement en traits mixtes sur la figure. Le vérin 10 se trouve à l'intérieur d'un massif en béton 12 sur lequel repose le caisson 4, le massif 12 reposant lui-même sur des amortisseurs pneumatiques 14. Le corps creux 2 est supporté par un chariot 16 qui permet de l'introduire dans le caisson 4 et de l'en extraire. Pour soumettre le corps 2 à des contraintes, on soumet la pièce 2 à une différence de pression grâce à un dispositif approprié (non représenté) relié au caisson 4 par une canalisation 18.

En effet, le dispositif de l'invention sert, entre autres, à contrôler l'état interne de pièces creuses ou réservoirs comportant un revêtement intérieur comme le revêtement 17 de la pièce 2. Si le revêtement se décolle, il se crée une poche d'air telle que 19 à l'endroit de chaque décollement. Si on fait le vide dans le caisson 4, l'air emprisonné dans la poche 19 gonfle celle-ci et on peut la voir sur l'interférogramme.

La figure 1 montre également le dispositif de contrôle objet de l'invention qui comporte d'abord une potence 20 placée à l'intérieur du caisson 4 et qui pénètre à l'intérieur du corps creux 2 lorsque le chariot 16 est introduit à l'intérieur du caisson grâce à une ouverture 21 ménagée à une extrémité du corps 2. A une extrémité de la potence 20 est suspendue une caméra holographique 22 conforme à l'invention, cette dernière pouvant pivoter par rapport à la potence 20 autour d'un axe vertical 24 représenté schématiquement en traits mixtes sur la figure. Une source laser 26, placée à l'extérieur du caisson 4, émet un faisceau 28 qui est dévié jusqu'à la caméra par une série de miroirs ou de prismes non représentés sur la figure 1. On voit sur celle-ci que le tronçon 28a du faisceau laser qui pénètre dans la caméra arrive par la partie supérieure de celle-ci et coïncide avec l'axe de rotation 24. Un pupitre de commande 30 permet à un opérateur de commander les mouvements des différentes pièces et de contrôler un cycle de prises de vue.

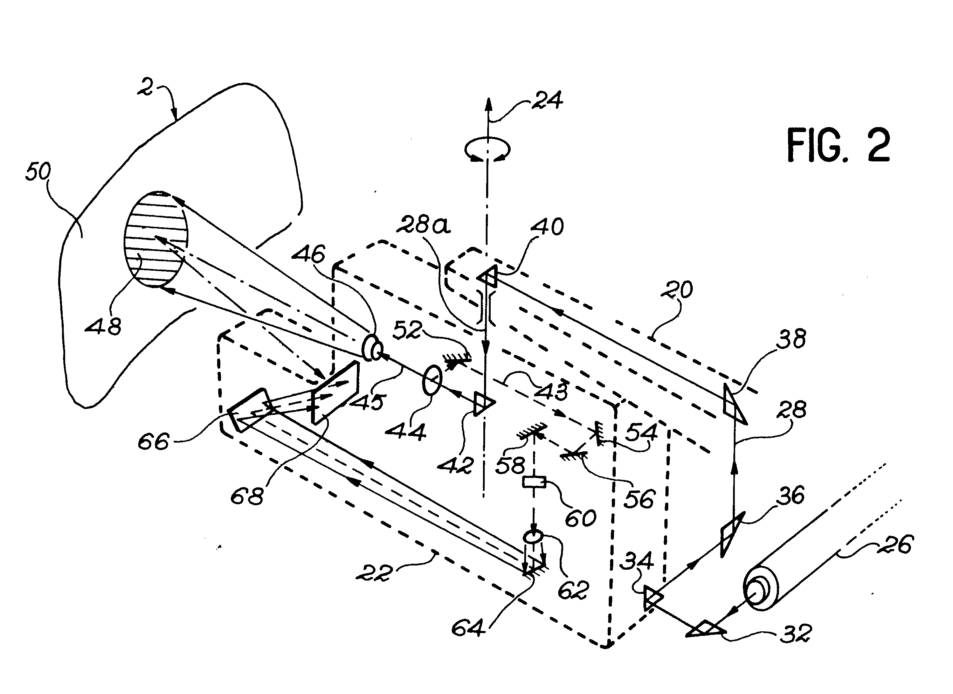

La vue en perspective de la figure 2 illustre schématiquement le trajet du faisceau laser depuis la source jusqu'à la caméra et à l'objet à contrôler. On retrouve sur cette figure la source laser 26 émettant le faisceau 28 qui est dévié par une série de prismes 32, 34, 36, 38 et 40 jusqu'à la caméra : la partie 28a du faisceau qui sort du prisme 40 entre

0169143

dans la caméra 22 en suivant un trajet qui coïncide avec l'axe de rotation 24 de la caméra par rapport à la potence 20. On pourrait bien entendu remplacer un ou plusieurs des prismes 32 à 40 par un miroir à réflexion totale : le nombre et la disposition des prismes ou des miroirs sera réglé par l'homme de l'art en fonction de chaque cas particulier, suivant la position respective de la source laser, du caisson et de la caméra, de manière à ce que le faisceau 28a pénètre dans celle-ci en coïncidant avec l'axe de rotation 24. On voit encore que le faisceau 28a, après avoir pénétré dans la caméra, rencontre un prisme 42 qui le réfléchit et le renvoie suivant une direction approximativement horizontale sur une séparatrice 44 : cette dernière prélève une partie du faisceau qui constituera le faisceau de référence 43 tandis qu'une autre partie, traversant sans déviation la séparatrice 44, constitue le faisceau objet 45. Le faisceau objet 45 est conditionné par un ensemble de lentilles 46 et vient frapper une zone 48 sur la face interne 50 du corps creux 2. Le faisceau objet est rétrodiffusé par la surface 48 et il vient frapper le plan film 68 où il interfère avec le faisceau de référence.

Dans le cas particulier décrit ici, le faisceau de référence sortant de la séparatrice 44 rencontre d'abord trois miroirs 52, 54, 56 qui le dévient dans un plan horizontal, puis le miroir 58 le dévie suivant une direction verticale : sur cette portion du trajet, le faisceau est conditionné par un filtre 60 et une lentille 62 avant d'être dévié suivant une direction horizontale par un miroir 64. Le faisceau frappe ensuite un miroir 66 qui le renvoie sur le film sensible ou plan-film 68. Cette disposition autorise la compacité optimum de la caméra. L'orientation du miroir 66 et du film 68 est telle que le faisceau de référence frappe ce dernier sous un angle identique à celui sous lequel il sera éclairé ultérieurement par

0169143

un faisceau laser lorsqu'un contrôleur procèdera aux observations.

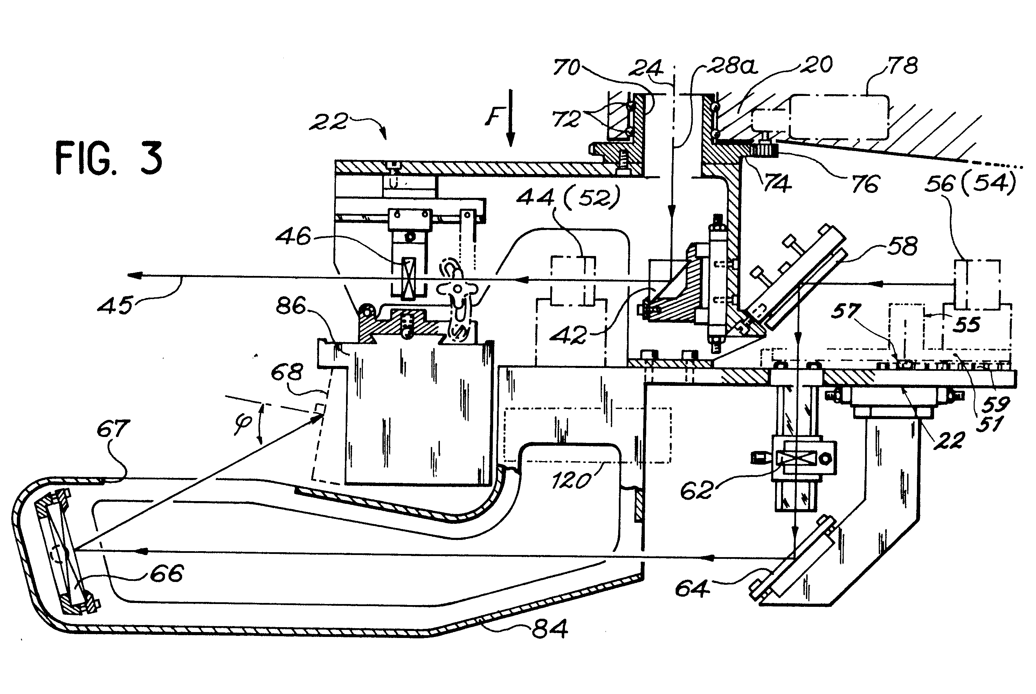

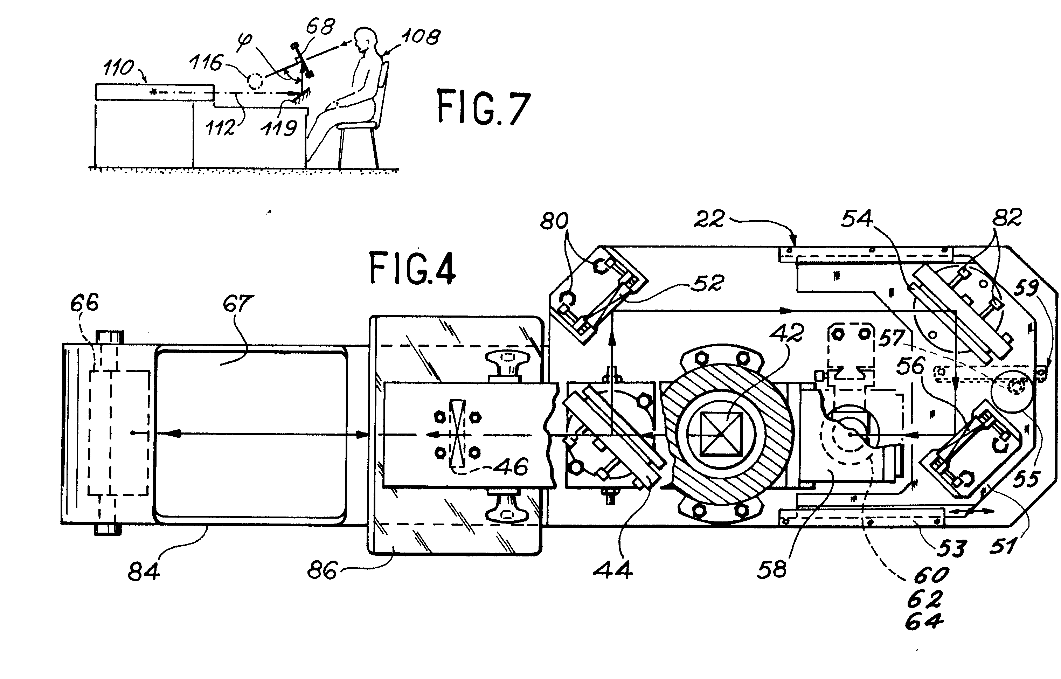

La constitution de la caméra apparaît mieux sur les figures 3 et 4 où l'on voit qu'elle est équipée d'un palier 70 (figure 3) monté sur la potence 20 au moyen de roulements à billes 72. Le palier 70 comporte une couronne dentée 74 qui coopère avec un pignon 76 lui-même mis en mouvement par un moteur 78 : cette disposition permet la rotation de la caméra autour de l'axe 24, mais on ne sortirait pas du cadre de l'invention en utilisant d'autres moyens de mise en rotation, y compris une rotation manuelle. On voit également sur les figures 3 et 4 la séparatrice 44 qui prélève le faisceau de référence ainsi que les miroirs 52 à 66 qui le dévient jusqu'au plan film 68. Chacun de ces miroirs est équipé de vis qui permettent d'en régler la position comme, par exemple, les vis 80 du miroir 52 ou les vis 82 du miroir 54. On comprend qu'il est possible de faire varier la longueur du faisceau de référence en jouant sur les positions relatives des différents miroirs à l'intérieur du volume de la caméra. Ainsi, on fera varier la distance de la caméra à l'objet, et donc la longueur du faisceau objet, dans les mêmes proportions. On peut voir encore sur la figure 3 que la caméra comporte à sa partie inférieure un bras 84, le miroir 66 étant placé à l'extrémité avant du bras 84. Cette disposition a pour but de renvoyer le faisceau réfléchi par le miroir 66 sur le plan film 68 sous un angle correspondant à l'angle d'observation par le contrôleur une fois que les interférogrammes ont été réalisés, le faisceau passant à travers une ouverture 67 prévue dans le bras 84. On peut voir également que le boîtier enregistreur 86, qui contient le plan film 68, est placé au-dessus du bras 84 de manière à ce que le plan film reçoive directement le faisceau rétrodiffusé par l'objet.

La figure 7 montre comment un contrôleur observe les interférogrammes après développement du film. Le contrôleur 108 est assis, ce qui représente la position d'observation la plus naturelle. Une source laser 110 émet un faisceau horizontal 112 qui est renvoyé dans une direction verticale par un miroir ou un prisme 119 et frappe le plan-film 68. Ce dernier étant incliné par rapport à la verticale pour faciliter l'observation, le faisceau 112 frappe le plan-film 68 sous un angle $\psi$ sensiblement égal à celui sous lequel il le frappait dans la caméra (figure 3). L'observateur voit sans problème en relief l'image virtuelle 116 de l'objet à contrôler. De plus, cette disposition offre un autre avantage car le faisceau laser réfléchi par le miroir passe verticalement devant le visage du contrôleur sans éblouir celui-ci.

La valeur de l'angle $\psi$ est comprise entre 30 et 50°, de préférence entre 33 et 39°. Ces valeurs résultent d'un compromis entre plusieurs exigences. En effet, l'angle $\psi$ doit permettre un bon rendement du film sensible, c'est-à-dire permettre d'obtenir des interférences suffisamment visibles. D'autre part, il faut assurer un bon confort de l'opérateur, c'est-à-dire que celui-ci doit pouvoir déplacer son visage pour observer l'interférogramme sans risquer d'être ébloui par le faisceau laser utilisé pour l'observation. Enfin, on est limité par la constitution mécanique de la caméra. Les inventeurs ont trouvé qu'on obtenait un compromis satisfaisant en donnant à l'angle $\psi$ une valeur comprise entre 30 et 50° et de préférence entre 33 et 39°. On a réalisé une caméra dans laquelle, toutes choses restant égales par ailleurs, on pouvait faire varier la position du plan-film dans une plage de 6°, mais on ne sortirait pas du cadre de l'invention en modifiant la valeur de cette plage ou

même en utilisant un système dans lequel la position du film serait fixée une fois pour toutes. Quant à la disposition illustrée à la figure 7, ce n'est qu'un exemple et on peut utiliser d'autres montages pour la transmission du faisceau laser 112, par exemple une source émettant directement un faisceau vertical. L'essentiel est que l'angle sous lequel le faisceau 112 frappe le film soit égal à l'angle sous lequel le faisceau de référence frappe le film à l'intérieur de la caméra.

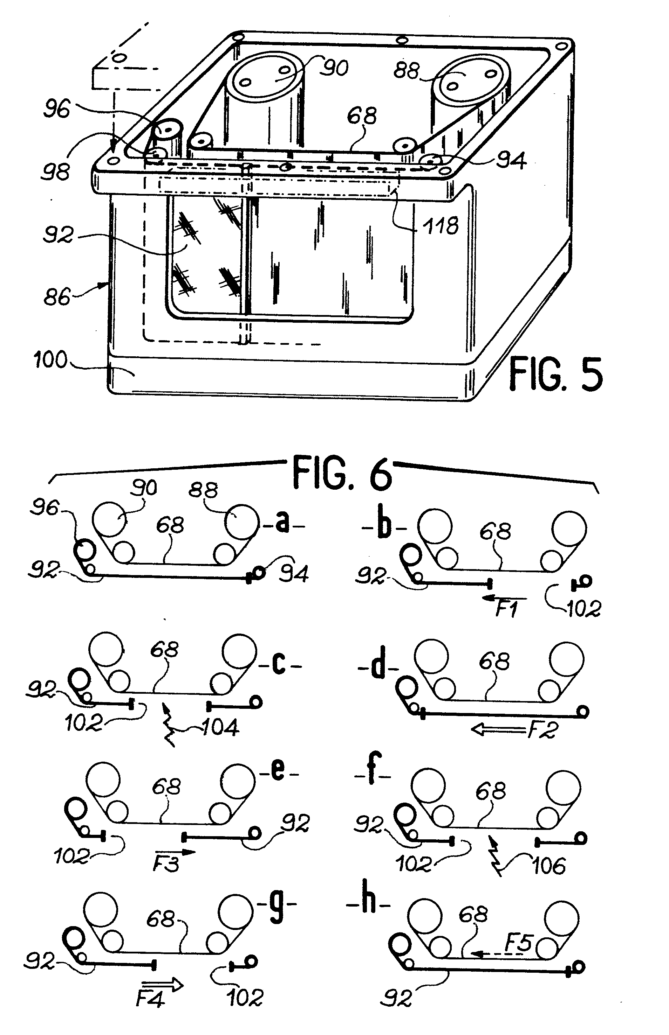

La vue en perspective de la figure 5 montre le boîtier enregistreur 86 qui comporte, de manière classique, un plan film 68 qui se déroule entre une bobine émettrice 88 et une bobine réceptrice 90. Un obturateur 92, équipé d'une fenêtre, peut se déplacer suivant un mouvement de va-et-vient devant le plan film, comme cela sera expliqué plus en détail ci-après en référence aux figures 6a à 6h. L'obturateur 92 est monté sur deux bobines 94 et 96 et guidé par un axe 98. On voit également, à la partie inférieure du boîtier, un dispositif de contrôle électronique 100 qui comman-de le déroulement des prises de vue. De plus, un dispositif 118 de marquage du film, par exemple un dispo-sitif alphanumérique LED, permet l'identification des prises de vue.

Ce cycle automatique est illustré aux figu-res 6a à 6h. La figure 6a illustre la position de départ dans laquelle l'obturateur 92 est placé devant le film 68 et empêche un faisceau de lumière parasite d'impressionner celui-ci. Lorsque le boîtier reçoit, par exemple d'un automate programmable pilotant l'en-semble du dispositif, l'ordre de procéder à la premiè-re exposition servant à la réalisation d'un interféro-gramme, le boîtier se donne à lui-même l'ordre d'ou-vrir l'oburateur et celui-ci se déplace dans le sens

de la flèche F1 (figure 6b) c'est-à-dire de la droite vers la gauche en regardant la figure. Ceci a pour effet d'amener l'ouverture ou fenêtre 102 prévue dans l'obturateur devant le film 68. On arrive ainsi à la position de la figure 6c où l'ouverture 102 est entièrement devant le film 68. A ce moment, le boîtier envoie l'ordre de déclenchement du faisceau laser et le film est impressionné par le faisceau de référence et le faisceau objet, comme cela est représenté schématiquement par la flèche en ligne brisée 104. Le boîtier se donne ensuite l'ordre de fermeture de l'obturateur et ce dernier se déplace dans le sens de la flèche F2 de la figure 6d, c'est-à-dire encore de la droite vers la gauche en regardant le dessin. Si la première vue a été prise alors que l'objet à contrôler n'était pas sous contrainte, le boîtier envoie l'ordre de mise en contrainte de l'objet par le dispositif approprié créant une différence de pression dans le caisson 4 (figure 1). Lorsque l'objet est mis sous contrainte, le boîtier reçoit l'ordre de procéder à la deuxième exposition et se donne l'ordre d'ouvrir l'obturateur. Ce dernier se déplace alors dans le sens de la flèche F3 (figure 6e) c'est-à-dire de la gauche vers la droite. Ceci a pour effet de ramener l'ouverture 102 devant le plan film 68 et l'on arrive à la position de la figure 6f qui est la même que celle de la figure 6c. Lorsque la position de la figure 6f est atteinte, le boîtier envoie l'ordre de déclenchement du laser et le film est impressionné par la lumière laser comme cela est symbolisé par la flèche en ligne brisée 106 de la figure 6f. Ensuite, le boîtier se donne l'ordre de fermeture de l'obturateur et ce dernier se déplace dans le sens de la flèche F4 (figure 6g) c'est-à-dire de la gauche vers la droite. On arrive ainsi dans la position de la figure 6h, qui est la même que celle de

la figure 6a, avec l'obturateur fermé. A ce moment, le boîtier se donne l'ordre d'avancer le film d'une vue, comme cela est symbolisé par la flèche F5 en traits interrompus sur la figure 6h, puis, si l'on désire continuer le contrôle en observant une autre partie de la pièce à examiner, le boîtier envoie un ordre de déplacer la caméra ou l'objet, par exemple par rotation de celle-ci autour de l'axe vertical 24. On peut également déplacer simultanément la caméra et l'objet. Le boîtier peut encore donner l'ordre de remettre la pièce dans un état non contraint et l'on recommence le cycle.

Le plan film 68 peut être un film de type courant ou un film thermoplastique. Dans ce dernier cas, par association avec une lecture vidéo, par exemple le dispositif 120 visible sur la figure 3, et mémorisation d'images, on peut effectuer un examen pratiquement immédiat ou légèrement différé sans perdre les avantages de l'automatisation, le temps s'écoulant entre la prise de vue et l'observation de l'interferogramme étant de quelques secondes. Dans le cas d'utilisation d'un film thermoplastique, ce dernier est d'abord sensibilisé par dépôt de charges électriques par effet Corona (phase de sensibilisation). Le film est ensuite exposé à la lumière, ce qui provoque des déséquilibres de charges créant des forces électrostatiques dont la distribution est une réplique de la distribution d'intensité lumineuse résultant des interférences entre les deux faisceaux. Le développement de l'hologramme consiste à chauffer le film, de sorte que le thermoplast se déforme sous l'effet des forces électrostatiques. La fixation est instantanée puisque le film se durcit en revenant à la température ambiante. L'hologramme (ou l'interférogramme) ainsi réalisé se présente comme une variation d'épaisseur d'un matériau transparent : c'est un hologramme de phase.

Le dispositif objet de l'invention peut être utilisé suivant trois modes de fonctionnement :

- le mode manuel,
- le mode automatique, et
- le mode semi-automatique.

Dans le mode manuel, on accède à toutes les fonctions indépendamment les unes des autres par intervention sur des boutons-poussoirs. Ce mode sert essentiellement à une phase de mise au point ou au contrôle d'un élément de l'installation ou au contrôle de pièces non standard. Le mode automatique est le mode normal de fonctionnement. Dans ce cas, l'opérateur n'intervient qu'une fois pour déclencher l'ensemble du cycle automatique. Le mode semi-automatique découpe le fonctionnement automatique en pas successifs, l'opérateur n'intervenant que pour sauter au pas suivant. Ce mode de fonctionnement permet essentiellement de contrôler le programme automatique ou d'en modifier une partie.

La gestion de l'ensemble est réalisée grâce à un système programmable, qui peut être un automate programmable comme, par exemple, l'automate PB 100 commercialisé par la Société MERLIN-GERIN. Celui-ci se présente sous la forme d'un coffret métallique contenant des connecteurs destinés à l'embrochage des sous-ensembles et des borniers permettant de raccorder l'automate aux différents capteurs et actionneurs qui équipent le dispositif. Les sous-ensembles embrochables comprennent une unité centrale qui pilote le fonctionnement de l'automate et gère les échanges entre les divers sous-ensembles, des cartes d'entrées qui réalisent l'acquisition des informations "tout ou rien" provenant des différents capteurs, et des cartes de sortie qui transmettent aux actionneurs les ordres

"tout ou rien" élaborés par l'automate. Tous ces sous-ensembles sont intercommutés par un bus servant de support aux échanges d'informations. Cet ensemble est complété par une console de maintenance et de programmation qui permet à l'opérateur de dialoguer avec l'automate. Reliée directement à l'unité centrale, cette console permet l'introduction du programme dans la mémoire de l'automate et sa mise au point. Elle sert également à vérifier ou à modifier un programme déjà existant. Le programme une fois écrit peut être sauvegardé par enregistrement sur une cassette. La console est bien entendu déconnectée en service normal puisque c'est l'automate qui gère et commande l'ensemble des opérations.

Bien entendu, on peut utiliser à cette fin d'autres dispositifs qu'un automate programmable : par exemple, un dispositif fondé sur l'emploi de microprocesseurs répondrait également aux besoins.

Il est bien entendu que l'invention ne se limite pas au seul mode de réalisation qui vient d'être décrit ici, mais qu'on peut envisager des variantes sans sortir pour autant du cadre de l'invention. C'est ainsi que, suivant les cas, l'homme de l'art pourra faire varier le nombre et la position des prismes ou des miroirs servant à dévier le faisceau laser depuis la source jusqu'à la caméra, en fonction de chaque cas particulier. Quant à la caméra, on peut également déterminer le nombre et l'emplacement des miroirs servant à dévier le faisceau de référence en fonction de l'utilisation envisagée. Il faut remarquer que la distance entre la caméra et la surface à examiner doit être telle que cette dernière se trouve à l'intérieur du "volume de cohérence" c'est-à-dire dans l'espace qui permet d'obtenir des interférences sur le plan film entre le faisceau de référence et le fais-

ceau objet. De nombreuses possibilités peuvent être mises en oeuvre pour observer la plus grande surface possible de la pièce creuse, par exemple : rotation de la pièce autour d'un axe horizontal, combinée ou non avec une rotation de la caméra autour d'un axe vertical, ou encore rotation de la caméra autour d'un axe horizontal. On peut également ajouter des déplacements en translation de la caméra, que ceux-ci soient effectués en mode manuel ou automatique. Ceci entraîne bien entendu la nécessité de déplacer et de régler à nouveau les miroirs ou prismes qui déterminent la longueur du faisceau de référence. Cette dernière opération peut aussi être automatisée et donc liée à l'automate. Ainsi, l'automate commande à distance des moteurs associés à chaque dispositif, coulissant, support des miroirs 52 à 66. On obtient ainsi la variation de longueur du faisceau de référence par déplacement des miroirs ou prismes 52 et 54 ou, 54 et 56 ou encore 52, 54 et 56.

Les figures 3 et 4 illustrent un exemple de mécanisme d'entraînement apte à déplacer simultanément les miroirs (ou prismes) 54 et 56 suivant la direction longitudinale de la caméra. On voit que ces deux miroirs sont montés sur un plateau coulissant 51 pouvant se déplacer longitudinalement par rapport à la caméra en étant guidé par des glissières 53. Le déplacement est obtenu grâce à un moteur 55, lui-même monté sur le plateau 51, et qui entraîne un pignon 57, lequel coopère avec une crémaillère 59 fixée à la caméra 22. On peut également prévoir un système semblable pour déplacer simultanément les miroirs 52 et 54 dans la direction transversale de la caméra ou un système plus complexe pour déplacer les trois miroirs 52, 54 et 56. Bien entendu, il ne s'agit là que d'un exemple de réalisation et on ne sortirait pas du cadre de

B 8196    JR

0169143

l'invention en utilisant un autre type de mécanisme d'entraînement pour déplacer les miroirs par rapport à la caméra.

Ainsi, le dispositif objet de l'invention présente des avantages interessants puisqu'il permet, par sa souplesse et son faible encombrement, d'explorer des cavités de dimensions réduites inaccessibles aux appareils de l'art antérieur. A titre d'essai, on a réalisé une telle caméra dont les dimensions extérieures sont d'environ 270x520x940 mm et qui pèse environ 37 kg alors que les dispositifs de l'art antérieur ont des dimensions qui sont toutes supérieures à 1 mètre et pèsent plus d'une tonne. De plus, le fait d'avoir séparé la caméra de la source laser et l'utilisation de nombreux miroirs ou prismes donnent à l'ensemble une grande souplesse qui permet de nombreuses observations, même sur des pièces de forme compliquée. Enfin, ce dispositif peut également être utilisé pour contrôler l'extérieur de pièces quelconques par voie externe.

0169143

## REVENDICATIONS

1. Caméra holographique, du type comportant une entrée pour un faisceau laser (28a), des moyens (44) de création d'un faisceau de référence (43) et d'un faisceau objet (45) et un film sensible (68), caractérisée en ce qu'elle comporte en outre :
- des moyens de montage sur un support (20) permettant une rotation de la caméra autour d'un axe confondu avec le faisceau laser entrant (28a),
- des moyens pour faire varier la longueur du faisceau de référence (43), et
- un boîtier enregistreur (86) contenant le film sensible (68).

2. Caméra holographique selon la revendication 1, caractérisée en ce que lesdits moyens de montage comprennent :
- un palier (70), solidaire de la caméra, monté sur le support (20) au moyen de roulements à billes (72), l'axe dudit palier (70) étant confondu avec le faisceau laser entrant (28a),
- une roue dentée (74) solidaire du palier (70),
- un pignon (76) coopérant avec ladite roue dentée (74), et
- un moteur (78) entraînant le pignon (76).

3. Caméra holographique selon l'une quelconque des revendications 1 et 2, caractérisée en ce que lesdits moyens pour faire varier la longueur du faisceau de référence comprennent au moins un élément réfléchissant (54) déplaçable à l'intérieur de la caméra grâce à un mécanisme d'entraînement (55, 59).

4. Caméra holographique selon la revendication 3, caractérisée en ce que ledit élément réfléchissant (54) est un miroir.

5. Caméra holographique selon la revendication 3, caractérisée en ce que ledit élément réfléchissant (54) est un prisme.

B 8196   JR

6. Caméra holographique selon l'une quelconque des revendications 1 à 5, caractérisée en ce que l'angle d'incidence du faisceau de référence (43) sur le film sensible (68) est compris entre 30° et 50°.

7. Caméra holographique selon la revendication 6, caractérisée en ce que l'angle d'incidence du faisceau de référence (43) sur le film sensible (68) est compris entre 33° et 39°.

8. Caméra holographique selon l'une quelconque des revendications 1 à 7, caractérisée en ce que le film sensible (68) est un film de type courant.

9. Caméra holographique selon l'une quelconque des revendications 1 à 7, caractérisée en ce que le film sensible (68) est un film thermoplastique.

10. Caméra holographique selon l'une quelconque des revendications 1 à 9, caractérisée en ce que le boîtier enregistreur (86) est équipé d'un dispositif électronique (100) commandant automatiquement le déroulement du film sensible (68).

11. Caméra holographique selon l'une quelconque des revendications 1 à 10, caractérisée en ce que le boîtier enregistreur (86) comporte un dispositif de marquage du film (68) afin de repérer les différents hologrammes.

12. Caméra holographique selon l'une quelconque des revendications 1 à 11, caractérisée en ce que le boîtier enregistreur (86) est équipé de moyens vidéo.

13. Caméra holographique selon l'une quelconque des revendications 1 à 12, caractérisée en ce que le boîtier enregistreur (86) est relié à un automate programmable contrôlant le déroulement d'un cycle de prises de vue.

14. Dispositif de contrôle non-destructif d'une pièce (2) par holographie optique, caractérisé

0169143

en ce qu'il comprend :

- une source laser (26) émettant un faisceau laser (28),

- une caméra holographique (22), dissociée de la source laser (26) et placée au voisinage de la pièce à contrôler (2),

- des moyens pour amener le faisceau laser (28) depuis la source (26) jusqu'à la caméra (22), et

- des moyens pour déplacer la caméra (22) au voisinage de la pièce à contrôler (2).

15. Dispositif de contrôle selon la revendication 14, caractérisé en ce que ladite caméra holographique (22) est conforme à l'une quelconque des revendications 1 à 13.

16. Dispositif de contrôle selon l'une quelconque des revendications 14 et 15, caractérisé en ce que la source laser (26) est une source laser à impulsions.

17. Dispositif de contrôle selon l'une quelconque des revendications 14 à 16, caractérisé en ce qu'il comporte en outre un système programmable commandant le déroulement d'un cycle de contrôle de ladite pièce (2).

FIG. 1

0169143

# FIG. 2

FIG. 3

FIG.7

FIG.4

FIG. 5

FIG. 6